# FASCICULE DE BREVET EUROPEEN

(11) **EP 1 261 948 B1**
(45) Date de publication et mention de la délivrance du brevet: **20.10.2004**
(21) Numéro de dépôt: 01911817.3
(22) Date de dépôt: 01.03.2001
(51) Int. Cl.: G07G 1/14

(54) **TERMINAL DE PAIEMENT SUR RESEAU LOCAL**
ZAHLUNGSENDGERÄT IN EINEM LOKALEN NETZWERK
LOCAL NETWORK PAYMENT TERMINAL

(30) Priorité: 01.03.2000 FR 0002655
(43) Date de publication de la demande: 04.12.2002
(73) Titulaire: Compagnie Industrielle et Financiere d'Ingenierie Ingenico S.A., 92816 Puteaux Cedex (FR)
(72) Inventeur: CHERPANTIER, Frédéric, F-92500 Rueil Malmaison (FR); GENOUD, Jean-Claude, F-91430 Igny (FR); MOREAU, Didier, F-94700 Maisons-Alfort (FR); SICOURI, Yves, F-92200 Neuilly-sur-Seine (FR)
(74) Mandataire: Cabinet Hirsch
(86) Numéro de dépôt international: PCT/FR2001/000608
(87) Numéro de publication internationale: WO 2001/065512

(56) Documents cités:
- WO-A-99/57835
- US-A- 5 256 863
- US-A- 5 475 742
- US-A- 5 884 278
- US-A- 5 923 016

## Description

L'invention concerne les systèmes de paiement, et plus précisément les terminaux de paiement.

Les systèmes de paiement comprennent généralement des caisses ou caisses enregistreuses. A ces caisses sont maintenant couramment associés des terminaux de paiment, qui permettent d'assurer le paiement par carte bancaire. Ces terminaux présentent un ou plusieurs lecteurs de cartes, des moyens d'affichage tels qu'un écran LCD et un clavier permettant à l'utilisateur de composer et valider un code d'identification personnel. On pourra consulter le "Manuel de Paiement Electronique" du Groupement des cartes bancaires pour plus de détails sur la structure et le fonctionnement de tels terminaux. D'autres périphériques sont couramment associés aux caisses, et par exemple des écrans, des douches ou lecteurs de codes barres, des scanners et des imprimantes.

Il est connu, par exemple du système de caisse proposé par la société IBM d'utiliser une liaison RS232 pour relier les différents périphériques à une caisse. La société IBM commercialise aussi des caisses dont les différents périphériques sont reliés par un mini-réseau propre à la caisse.

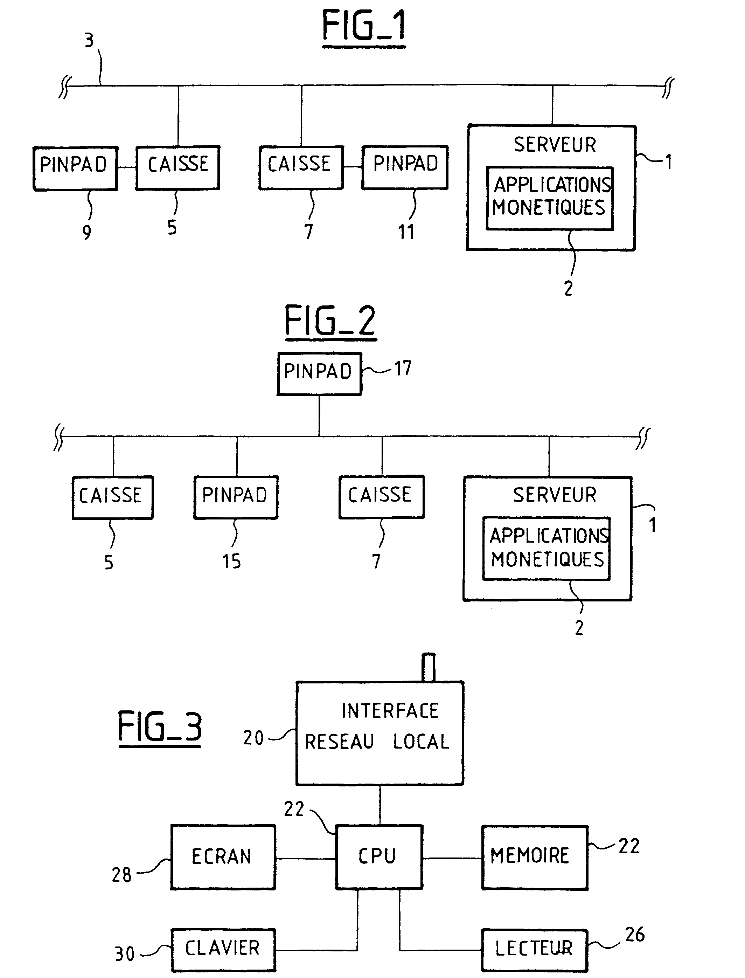

Pour des installations complexes, telles que celles qui existent dans les magasins de grande distribution, les différentes caisses sont reliées entre elles et reliées à un serveur; ce serveur contient des applications monétiques, et peut notamment gérer les cartes du magasin, les cartes bancaires, contenir les listes noires, gérer les limitations de montant pour les différentes cartes. La figure 1 montre une configuration connue pour un système de paiement. La référence 1 désigne le serveur, avec les applications monétiques 2. Le serveur est relié à un réseau local 3, typiquement un réseau de type Ethernet, sur lequel sont branchées deux caisses 5 et 7. 9 et 11 désignent deux périphériques des caisses 5 et 7, en l'espèce des terminaux de paiement. Comme indiqué plus haut, les terminaux de paiement sont typiquement reliés aux caisses par des liaisons du type RS232. Dans une telle configuration, chaque caisse présente un applicatif de paiement, qui envoie vers le terminal de paiement le montant à payer, et qui reçoit le résultat de l'opération de paiement depuis le terminal de paiement. Chaque caisse présente en outre un applicatif de routage vers le serveur des informations nécessaires pour les applications monétiques mises en oeuvre sur le serveur.

Le fonctionnement d'une caisse est le suivant. La caisse présente des applications d'encaissement, qui lui permettent de totaliser les articles choisis par un client, et des applications de monétique qui lui permettent de procéder à l'opération de paiement. L'opérateur procède à l'encaissement des différents articles choisis par le client et pendant cette phase, les applications d'encaissement pilotent la douche, le scanner ou les autres périphériques utiles; une fois l'encaissement terminé, les applications de monétiques sont activées pour le paiement; dans le cas d'un paiement par carte bancaire, le terminal de paiement est activé. Si nécessaire, la caisse interroge le serveur pour obtenir l'autorisation nécessaire pour la transaction. La transaction est ensuite mémorisée, soit par le serveur, soit dans la caisse en mode dégradé. La caisse procède ensuite à l'impression du ticket. Le document US-A-5256863 décrit un système de ce type.

L'invention a pour but de résoudre les nouveaux problèmes que pose cette configuration des systèmes de paiement. La configuration connue de la figure 1 fonctionne de façon satisfaisante; elle nécessite toutefois de prévoir lors de la conception de la caisse les applications nécessaires pour piloter le terminal de paiement, et pour se connecter au centre serveur. Il est aussi utile de pouvoir mettre à jour le logiciel du terminal de paiement. Dans la configuration de la figure 1, cette mise à jour nécessite une intervention physique d'un opérateur sur le terminal de paiement.

L'invention propose une solution à ces problèmes; elle permet de simplifier les applications des caisses, et des terminaux de paiement. Pour ce qui est de la mise à jour, l'invention permet une mise à jour simple et rapide des logiciels des terminaux de paiement.

Plus précisément, l'invention propose un système de paiement, présentant un réseau local sur lequel sont connectés aux moins deux caisses ou une caisse et un serveur et un terminal de paiement connecté directement au réseau local, ainsi qu'une méthode selon la revendication 5.

Le réseau local est avantageusement un réseau au protocole TCP/IP ou un réseau de type Ethernet.

Dans un mode de réalisation, le terminal comprend des moyens de mise à jour à distance d'un logiciel.

L'invention concerne aussi un procédé de paiement dans un tel système de paiement, caractérisé par les étapes de :
- transmission par la caisse des éléments nécessaires à la transaction sur le réseau local;
- réception par un terminal de paiement des dits éléments depuis le réseau local;
- paiement sur le dit terminal; et
- transmission par le terminal sur le réseau local d'une validation du paiement.

De préférence, l'étape de paiement comprend l'échange d'informations entre le terminal et un serveur à travers le réseau local.

L'invention concerne enfin un terminal de paiement, comprenant au moins un lecteur de carte et une interface vers un réseau local au protocole TCP/IP. Dans un mode de réalisation, l'interface est une interface vers un réseau de type Ethemet.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'un système de paiement de l'art antérieur ;
- figure 2 une représentation schématique d'un système de paiement selon l'invention ;
- figure 3 une représentation schématique d'un terminal de paiement selon l'invention.

L'invention propose dans un système de paiement présentant un réseau local sur lequel sont connectés aux moins deux caisses, ou une caisse et un serveur, de relier les terminaux de paiement directement au réseau local. Cette configuration permet d'abord de partager les terminaux de paiement entre différentes caisses. Elle permet aussi de simplifier les caisses, tant du point de vue de la connectique que du point de vue des applications. Elle permet enfin de simplifier la mise à jour des logiciels dans les terminaux de paiement, en assurant un accès direct par l'intermédiaire du réseau local aux terminaux de paiement.

La figure 2 montre une représentation schématique d'un système de paiement selon l'invention. On reconnaît sur la figure le réseau local, le serveur, et deux caisses référencées comme sur la figure 1. Comme le montre la figure, le système de paiement comporte aussi des terminaux de paiement 15 et 17. On a dans l'exemple représenté deux terminaux de paiement, mais le nombre de terminaux de paiement est indépendant du nombre de caisses.

Selon l'invention, les terminaux de paiement sont directement raccordés au réseau local, sur lequel les caisses sont raccordées. Le réseau local est par exemple un réseau de type Ethernet, ou encore un réseau au protocole TCP/IP. L'utilisation de tels types de réseau est courante dans les systèmes de paiement et il existe de nombreuses caisses susceptibles de communiquer avec un serveur par l'intermédiaire d'un tel réseau.

Le fonctionnement du système de la figure 2 est le suivant. Comme dans les systèmes de paiement de l'art antérieur, l'opérateur procède aux opérations d'encaissement des différents articles choisis par le client. Après encaissement, l'opérateur entame les opérations de paiement. Les éléments nécessaires à la transaction - au minimum le montant de la transaction - sont transmis par la caisse vers un terminal de paiement et/ou vers le serveur, à travers le réseau local. Il peut s'agir d'un terminal de paiement affecté à la caisse, ou d'un terminal qui est partagé entre plusieurs caisses. Une caisse peut aussi avoir le choix d'effectuer une opération de paiement vers un terminal choisi parmi une pluralité de terminaux; dans ce cas, on peut prévoir une sélection par l'opérateur du terminal de paiement à utiliser pour une opération d'encaissement donnée. On peut donc par exemple prévoir d'utiliser pour plusieurs caisses un groupe de différents terminaux, de sorte à pouvoir procéder à des paiements à l'aide de différentes cartes sans pour autant multiplier le nombre de terminaux. La caisse attend ensuite une validation du paiement pour l'édition d'un ticket de caisse.

Le terminal sur lequel le paiement doit être effectué et/ou le serveur reçoivent sur le réseau les éléments nécessaires à la transaction. Ces éléments peuvent être transmis uniquement vers le terminal de paiement, si la transaction ne nécessite pas d'autorisation et si la mémorisation de la transaction s'effectue dans le terminal ou dans la caisse elle-même. Ces éléments peuvent aussi être transmis vers le serveur, s'il est nécessaire de vérifier sur le serveur des éléments relatifs à la transaction - montant de la transaction par exemple.

L'opération de paiement proprement dite s'effectue ensuite sur le terminal de paiement, typiquement par l'entrée d'un code d'identification personnelle.

On peut encore prévoir une transmission d'informations entre le terminal de paiement et le serveur; par exemple l'identité du porteur de la carte peut être transmise par le terminal de paiement vers le serveur, pour vérifier que la carte n'est pas une carte volée, ou pour vérifier que le montant de la transaction ne dépasse pas un des plafonds de la carte, ou encore pour une vérification auprès d'un centre serveur distant.

De façon plus générale, l'opération de paiement peut être contrôlée en local dans le terminal de paiement; il est aussi possible de prévoir un contrôle à distance du terminal de paiement par les applications monétiques du serveur. Toute solution intermédiaire de partage du contrôle de la gestion de l'opération de paiement entre le terminal et le serveur est possible.

Lorsque le paiement est validé par le terminal de paiement, le cas échéant après autorisation transmise par l'intermédiaire du réseau local, la validation du paiement est transmise vers la caisse, toujours à travers le réseau local. La caisse reçoit alors depuis le réseau local la validation du paiement, et édite le ticket de caisse, ainsi que le cas échéant la facturette du paiement par carte.

L'invention présente les avantages suivant par rapport à l'art antérieur. Du point de vue de la caisse, l'invention permet de simplifier la conception et le développement de la caisse. De fait, dans les caisses de l'état de la technique, il était nécessaire de prévoir une interface spécifique pour chaque type de terminal de paiement; grâce à l'invention, il est possible d'utiliser pour le terminal de paiement l'interface existante pour la communication sur le réseau local. Le développement de la caisse peut donc s'effectuer indépendamment du terminal ou quasiment indépendamment du terminal. Les spécificités du terminal ont sur le logiciel de la caisse une influence plus limitée que dans les caisses de l'état de la technique.

Du point de vue du terminal de paiement, l'invention évite de devoir développer une interface spécifique avec chaque type de caisse existante; elle permet d'utiliser pour la communication des moyens de communication largement connus - une carte Ethemet - et des outils de développement standardisés.

L'invention permet aussi de simplifier considérablement la mise à jour des logiciels et applications dans les terminaux de paiement. De fait, comme le montre la figure, il est possible depuis le serveur et les applications monétiques d'accéder directement aux terminaux de paiement, par l'intermédiaire du réseau local, sans passer par la caisse. Cet accès direct aux terminaux de paiement permet une mise à jour à distance des logiciels sur les terminaux de paiement, sans intervention locale sur les terminaux de paiement. La mise à jour est aussi possible sans interruption du fonctionnement des caisses.

La figure 3 montre une représentation schématique de la structure d'un terminal de paiement selon l'invention. Le terminal présente une interface 20 avec le réseau local, une unité de calcul 22, et une mémoire 24. L'unité de calcul 22 est reliée à l'interface et aussi à la mémoire. Par ailleurs, l'unité de calcul est reliée au(x) lecteur(s) de carte 26, à l'écran 28 et au clavier 30 du terminal. Comme expliqué plus haut, le terminal fonctionne sensiblement comme un terminal de l'état de la technique, à cela près que les informations lui sont transmises par l'intermédiaire du réseau local. Ceci permet de simplifier les logiciels mis en oeuvre dans le terminal, et évite de devoir adapter le terminal aux spécifications d'une caisse donnée. Par ailleurs, l'invention permet un chargement à distance d'applications dans la mémoire du terminal, directement depuis le réseau local.

Bien entendu, la présente invention n'est pas limitée aux exemples et modes de réalisation décrits et représentés, mais elle est susceptible de nombreuses variantes accessibles à l'homme de l'art. Dans l'exemple de la figure 2 est prévu un serveur sur le réseau local. Il est aussi possible que le serveur soit un serveur distant, qui n'est pas directement connecté sur le réseau local. Ce peut être le cas par exemple pour plusieurs magasins reliés à un serveur unique.

Il est aussi clair que l'invention n'est pas limitée au mode de réalisation préféré d'un réseau au protocole TCP/IP comme les réseaux de type Ethernet. On pourrait utiliser pour les réseaux d'autres types de protocoles ou de réseaux.

## Revendications

1. Un système de paiement, présentant un réseau local (3) sur lequel sont connectés aux moins deux caisses (5, 7) ou une caisse (5, 7) et un serveur (1) et un terminal de paiement (15, 17) connecté directement au réseau local.

2. Le système de la revendication 1, **caractérisé en ce que** le réseau local est un réseau au protocole TCP/IP.

3. Le système de paiement de la revendication 1 ou 2, **caractérisé en ce que** le réseau local est un réseau de type Ethernet.

4. Le système de la revendication 1, 2 ou 3, **caractérisé en ce que** le terminal comprend des moyens de mise à jour à distance d'un logiciel.

5. Un procédé de paiement dans un système de paiement selon l'une des revendications 1 à 4, **caractérisé par** les étapes de :
- transmission par la caisse (5) des éléments nécessaires à la transaction sur le réseau local (3) ;
- réception par un terminal de paiement (15) des dits éléments depuis le réseau local (3) ;
- paiement sur le dit terminal; et
- transmission par le terminal sur le réseau local d'une validation du paiement.

6. Le procédé de la revendication 4, **caractérisé en ce que** l'étape de paiement comprend l'échange d'informations entre le terminal et un serveur à travers le réseau local.

## Claims

1. A cash desk system, having a local area network (3) to which at least two checkout cash registers (5, 7) or a checkout cash register (5, 7) and a server (1) are connected, and a PIN pad or terminal at which payment is made (15,17) directly connected to the local area network.

2. The system of claim 1, **characterised in that** the local area network is running the TCP/IP protocol.

3. The cash desk system of claim 1 or 2, **characterised in that** the local area network is an Ethernet type network..

4. The system of claim 1, 2 or 3, **characterised in that** the PIN pad includes means for remote software updating..

5. A method for payment in a cash desk system according to one of Claims 1-4, **characterised by** the steps of:
- transmission, by the checkout cash register (5), of those elements necessary for the transaction over the local area network (3);
- a PIN pad (15) receiving said elements from the local area network (3);
- payment at said PIN pad; and
- transmission of payment validation by the PIN pad over the local network.

6. The method of claim 5, **characterised in that** the payment step comprises exchange of information between the PIN pad and a server, via the local area network.

## Patentansprüche

1. Zahlungssystem, umfassend ein lokales Netzwerk (3), an das mindestens zwei Kassen (5, 7) oder eine Kasse (5, 7) und ein Server (1) angeschlossen sind, und an das direkt ein Zahlungsterminal (15, 16) angeschlossen ist.

2. System nach Anspruch 1, **dadurch gekennzeichnet, daß** das lokale Netzwerk ein Netzwerk gemäß dem TCP/IP-Protokoll ist.

3. System nach Anspruch 1 oder 2, **dadurch gekennzeichnet, daß** das lokale Netzwerk ein Ethernet-Netzwerk ist.

4. System nach Anspruch 1, 2 oder 3, **dadurch gekennzeichnet, daß** das Terminal eine Einrichtung zur Fern-Aktualisierung von Software aufweist.

5. Zahlungsverfahren in Verbindung mit einem Zahlungssystem nach einem der Ansprüche 1 bis 4, **dadurch gekennzeichnet, daß** folgende Schritte vorgesehen sind:
- Übertragen der für die Transaktion benötigten Elemente von der Kasse (5) auf das lokale Netzwerk (3);
- Empfang der genannten Elemente von dem lokalen Netzwerk (3) in einem Anschlußterminal (15);
- Zahlen über das erwähnte Terminal; und
- Übertragen einer Zahlungs-Bestätigung von dem Terminal auf das lokale Netzwerk.

6. Verfahren nach Anspruch 4, **dadurch gekennzeichnet, daß** der Schritt des Zahlens und der Austausch von Informationen zwischen dem Terminal und einem Server über das lokale Netzwerk beinhaltet.
